Europäisches Patentamt

**European Patent Office**

**Office européen des brevets**

(19)

(11) Publication number: **0 092 433**
**A1**

(12) **EUROPEAN PATENT APPLICATION**

(21) Application number: **83302229.6**

(22) Date of filing: **19.04.83**

(51) Int. Cl.³: **B 25 J 9/00**

(30) Priority: **19.04.82 JP 64940/82**

(43) Date of publication of application: **26.10.83**
**Bulletin 83/43**

(84) Designated Contracting States: **DE FR GB**

(71) Applicant: **FANUC LTD, 5-1, Asahigaoka 3-chome Hino-shi, Tokyo 191 (JP)**

(72) Inventor: **Inaba, Hajimu, 5-3-16 Asahigaoka, Hino-shi Tokyo (JP)**
Inventor: **Hiraizumi, Mitsuo, 581-16, Kitano-machi, Hachioji-shi Tokyo (JP)**

(74) Representative: **Billington, Lawrence Emlyn et al, HASELTINE LAKE & CO Hazlitt House 28 Southampton Buildings Chancery Lane, London WC2A 1AT (GB)**

(54) **Robot control method and apparatus.**

(57) A system for controlling a robot, provided with a hand having a sensor, in accordance with stored robot command data and program data to carry a workpiece, from a plurality of workpieces stacked on a table, to a predetermined point by gripping the workpiece with the hand. When the hand is moved toward the stacked workpieces and the sensor senses an uppermost one of the workpieces, movement of the hand stops and the uppermost workpiece is gripped by the hand in accordance with a workpiece gripping program stored in memory. Upon gripping the workpiece, the hand is moved to the predetermined point in accordance with the next item of robot command data.

## TITLE OF THE INVENTION

ROBOT CONTROL METHOD AND APPARATUS

## BACKGROUND OF THE INVENTION

This invention relates to a method and apparatus for controlling a robot and, more particularly, to a robot control method and apparatus which permit a robot to be taught in a simple manner.

The rising cost of labor has given rise to a demand for labor-saving measures and for improvement in work procedures. Industrial robots have been put into use to meet this demand and have been very successful in doing so. Particularly outstanding results have been achieved in plants having numerous machine tools where industrial robots are used to perform such simple services as changing the workpieces and tools associated with each machine tool. The demand for such robots has grown yearly.

With such playback type industrial robots, an operator uses a teaching box to teach the service operations in advance, and the taught data (referred to as robot command data hereinafter) are stored in a memory within a control unit. Whenever a request for a service arrives from the machine tool side, a series of the above robot command data is read out of the memory sequentially, and the robot responds by servicing the machine in repeated fashion as prescribed by the data.

The robot command data comprises point information regarding a point at which a service is to be performed, robot operating speed, and service codes which indicate control of the hand at the point and which instruct also the exchange of signals with the machine tool side. In general, the teaching operation mentioned proceeds by (1) setting a memory address at which an item of robot command data is to be stored, (2) positioning the robot at the service point by a jog-feed (manual feed) operation, (3) setting position information regarding the point, as well as the magnitude of the speed command for movement up to the point, and 4) setting the robot service codes which specify the service to be performed at the point. A series of robot operations for a machine tool is taught by repeating the sequence (1) through (4).

Accordingly, as long as there are no problems with the mechanism or control system of the robot, the robot will be positioned at the predetermined operating speed in accordance with the robot command data each time a service is requested, after which the robot will sequentially and correctly execute such services as workpiece exchange, cleaning of machining scraps and control of the hand.

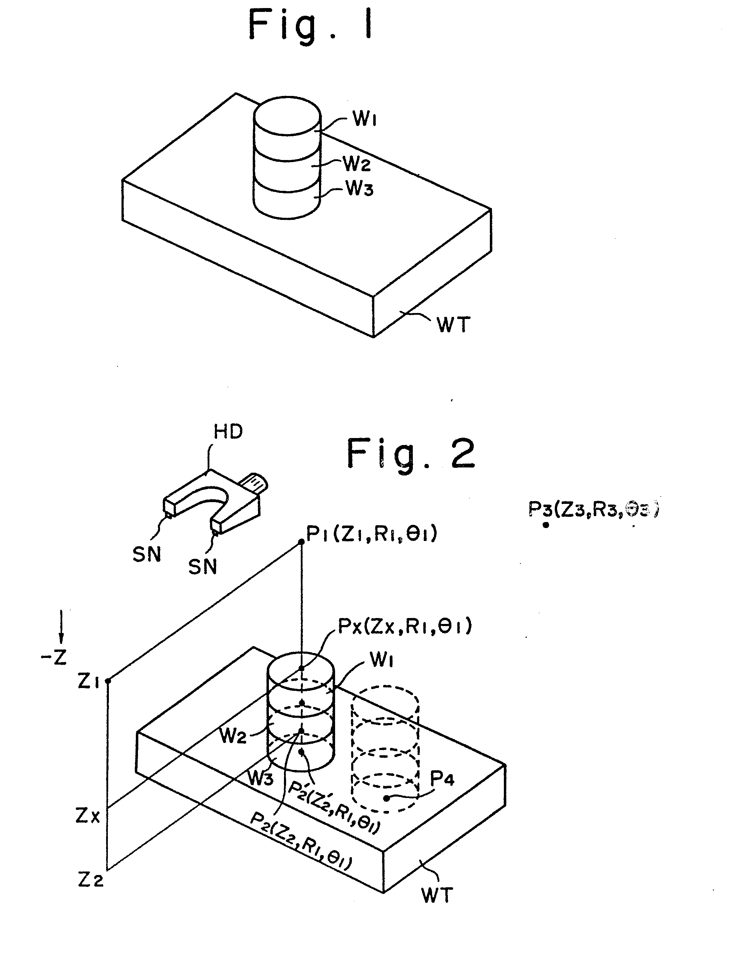

Robots of the above kind are often used in operations of the kind shown Fig. 1, wherein a multiplicity of unmachined workpieces W1 through W3, stacked on a workpiece table WT, are to be gripped and carried by the robot in sequential order. Since each unmachined workpiece occupies a different position or height relative to the table, the robot must be taught each position individually. This obviously entails a troublesome a teaching operation. Similarly, when the robot is to stack machined workpieces on the table WT, the position or height at which each workpiece is to be released by the robot will differ. Again this involves the complicated task of teaching the robot a position for each and every workpiece in a stack.

## SUMMARY OF THE INVENTION

An object of the present invention is to provide a robot control system wherein the positions of workpieces stacked on a table, or positions at which workpieces are to be stacked on the table, can be taught in a simple manner to enable gripping or stacking of the workpieces.

Another object of the present invention is to provide a robot control system wherein robot services can be performed correctly, without teaching workpiece gripping and stacking positions in an accurate manner, by teaching data indicative of a position no higher than a lowermost workpiece in a stack, and by providing a sensor on a robot hand to sense workpieces in a stack.

According to the present invention, the foregoing objects are attained by providing a method and apparatus for controlling a robot, provided with a hand having a sensor, in accordance with stored robot command data and program data to a carry a workpiece, from a plurality of workpieces stacked on a table, to a predetermined point by gripping the workpiece with the hand. In accordance with point data stored in a first memory, and under the control of a processor, the robot moves its hand toward a first point located above the stacked workpieces and then along the Z axis toward a second point in accordance with the point data to approach the plurality of stacked workpieces. The sensor senses an uppermost one of the stacked plurality of workpieces and responds by delivering a detection signal to the processor which responds by causing the robot to suspend movement of the hand and by reading the program data out of a second memory. The processor then executes processing based on the program data to cause the robot to close its hand on and grip the uppermost workpiece, the robot delivering a signal to the processor when the uppermost workpiece has been gripped. The processor responds by reading a subsequent item of point data out of the first memory to cause the robot to move its hand to the predetermined point.

Other features and advantages of the present invention will be apparent from the following description taken in conjunction with the accompanying drawings, in which like reference characters designate the same or similar parts throughout the figures thereof.

BRIEF DESCRIPTION OF THE DRAWINGS

Fig. 1 is a schematic perspective view showing a number of unmachined workpieces stacked on a workpiece table;

Figs. 2, 3 and 4 are views useful in describing application of the present invention in a case where a number of unmachined workpieces are stacked on a workpiece table, in which Fig. 2 is a schematic perspective view, Fig. 3 a diagram showing the organization of robot command data and Fig. 4 a diagram showing a path traversed by a robot arm expressed in cylindrical coordinates;

Fig. 5 is a block diagram illustrating a robot control apparatus embodying the present invention; and

Fig. 6 is a flow chart according to the present invention.

## DESCRIPTION OF THE PREFERRED EMBODIMENT

Reference will now be had to Figs. 2 through 4 to describe an embodiment of the present invention for an application where unmachined workpieces W1, W2, W3, stacked on a workpiece table WT as shown in Fig.2, are to be gripped and carried by a robot to a point $P_3$ one after another in the order mentioned. The robot, having a hand indicated at HD, operates in a cylindrical coordinate system (R, Z and $\theta$ axes) in which points P1, P2, P2' and P3 have the coordinates (Z1, R1, $\theta$1), (Z2, R1, $\theta$1), (Z2', R1, $\theta$1) and (Z3, R3, $\theta$3), respectively. The robot hand HD is moved from a point, which is not shown, to the present point P1 at a

speed V1, from point P1 toward point P2$'$ at a speed V2, and from a point Px, lying on the straight line connecting P1 and P2, to point P3 at a speed V3. The hand HD has a sensor SN such as proximity sensing means attached thereto for producing a signal when a workpiece is sensed. The position of the point P2$'$ is lower than that of the point P2, namely Z2 > Z2$'$.

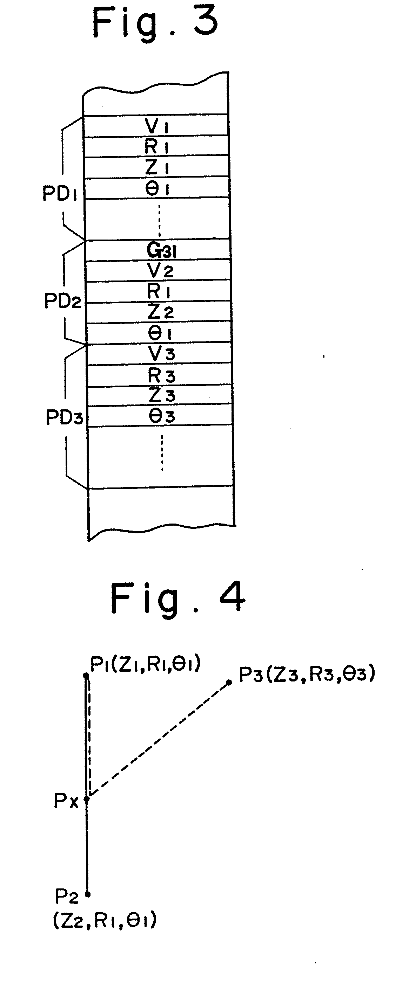

Robot command data has the organization shown in Fig. 3 and comprises items of point data PD1, PD2, PD3... specifying respective points in space P1, P2$'$, P3..., speeds for movement up to the particular point and so on. The first item worthy of noting with regard to the robot command data is that the Z coordinate (Z2$'$) of the point data PD2 is taught as being no higher than the position of any of the workpieces stacked along the Z axis. The preparation command G31 indicates that Z coordinate of the point data including G31 is taught as being no higher than the position of any of the workpieces stacked along Z axis. In other words, according to a feature of the present invention, the Z coordinate of the point P2$'$ which is below the lowermost unfinished workpiece W3 is taken as the Z coordinate of the point data PD2. As will become clear later, this means that Z coordinates of the workpieces need not be taught in order to be gripped by the hand, thereby simplifying the teaching operation. The second item which should be noted is that the item of point data PD2 does not contain a robot service code for gripping any of the workpieces W1 through W3.

To grip the first or uppermost unmachined workpiece W1 and carry it to the predetermined point P3, the hand HD is moved from the present point P1 toward the stacked workpieces along the Z axis until, at point Px, the sensor SN attached to the hand HD senses the workpiece W1, whereupon movement of the hand is suspended. The path followed by the hand is as indicated by the dashed line extending from point P1 to Px in Fig. 4. Thereafter, the hand HD is caused to close upon and grip the sensed workpiece W1 in accordance with a grip command contained in a program stored previously in the memory of a robot control apparatus, described latter. When gripping of the workpiece W1 is completed, a signal indicative of the event is generated, in response to which the robot hand HD is moved to point P3, which is specified by the item of point data PD3. This is shown in Fig. 4 by the dashed line extending from point Px to point P3. Gripping and then carrying the remaining unmachined workpieces W2, W3 to the point P3 is performed in exactly the same manner, based on the same items of point data PD1 through PD3. Thus, if the robot command data is prepared as a series of point data including data so taught as to indicate a position no higher than the lowermost workpiece, then each of the workpieces W1 through W3 can be gripped based solely on said series of data. The position of each workpiece along the Z axis need not be taught.

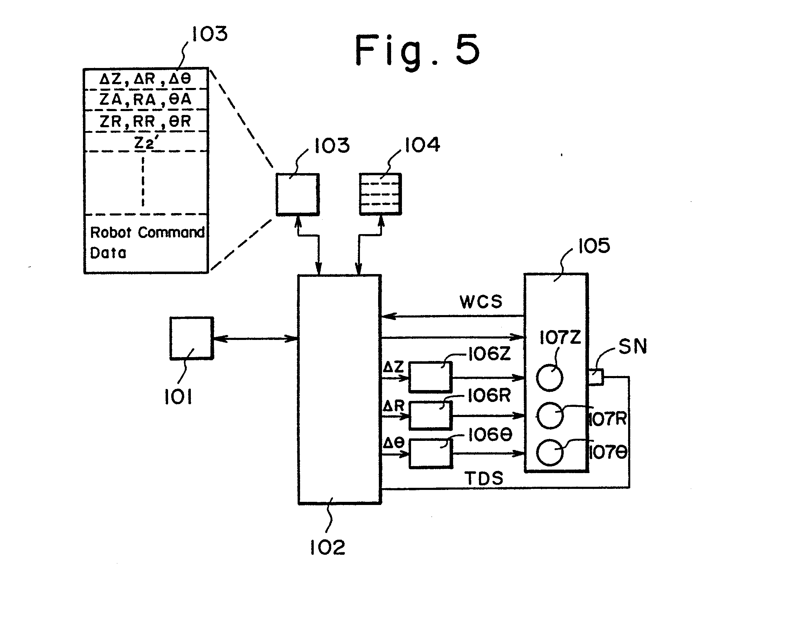

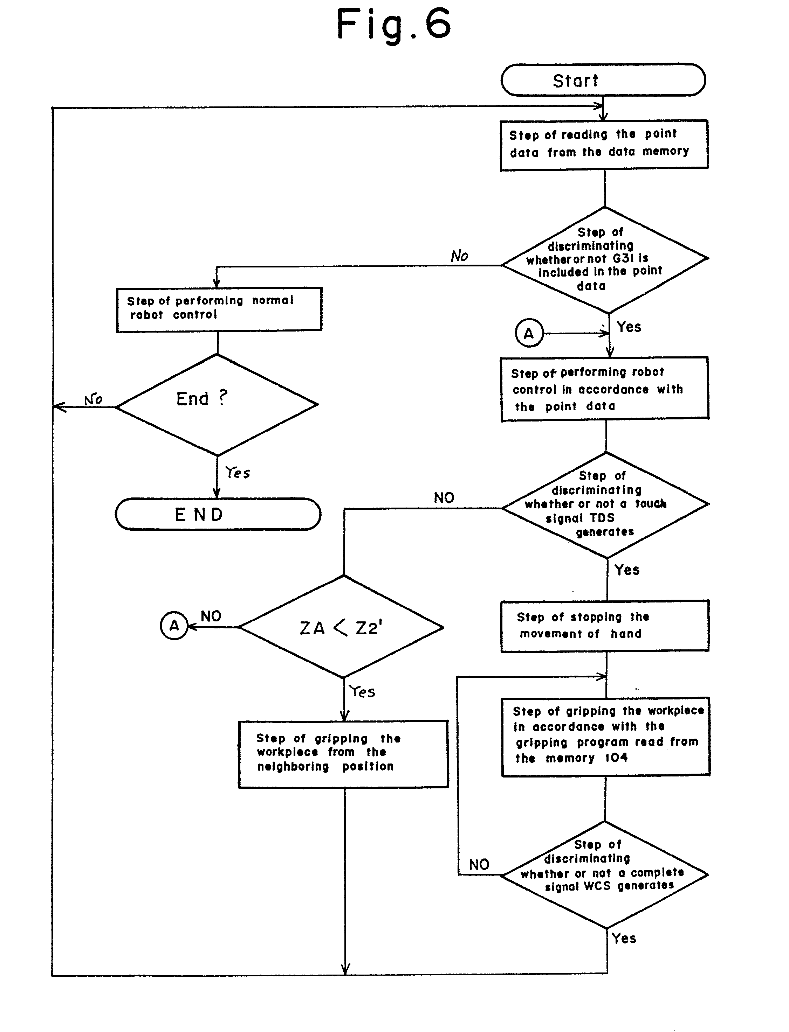

A robot control apparatus for practicing the above-described method of the invention is illustrated in Fig. 5 and the flow chart of processing is shown in Fig. 6. The apparatus includes a teaching box 101 for teaching the series of robot command data illustrated in Fig. 3, a processor 102 which receives the taught data from the teaching box 101, a data memory 103 in which the taught data is stored by the processor 102, and a registration memory 104 in which are stored program data for gripping unmachined workpieces stacked on the workpiece table, and program data for stacking completed workpieces on the workpiece table, the memory 104 being connected to the processor 102 so that the processor may read said data. The processor 102 is also connected to a robot 105 having the abovementioned sensor SN attached to the hand thereof, the output TDS of the sensor being applied to the processor 102.

When the above-described system is set into operation, the processor 102 reads the robot command data out of the data memory 103 and controls the motion of the robot 105 in accordance with the items of point data PD1, PD2, PD3... constituting the robot command data.

Namely, at first path of the hand HD is controlled based on the point date PD1. When the point data PD1 is read, the processor 102 computes incremental values Zi, Ri, θi in each direction. Thereafter, the processor 102 proceeds to store these values in the data memory 103 as remaining amounts of movement ZR, RR, θR respectively, and performs the following operations to compute Z-, R- and θ-axis amounts of movement $\Delta Z$, $\Delta R$, $\Delta \theta$ to be traversed during a predetermined length of time $\Delta T$:

$$\Delta Z = FZ \cdot \Delta T \quad . . . . . . . . (1)$$

$$\Delta R = FR \cdot \Delta T \quad . . . . . . . . (2)$$

$$\Delta \theta = F\theta \cdot \Delta T \quad . . . . . . . . (3)$$

The values of $\Delta Z$, $\Delta R$ and $\Delta \theta$ are stored in a storage area of the data memory 103 and are fed into the pulse distributors 106Z, 106R, 106θ. Note that the period of $\Delta T$ in the foregoing equations is a quantity preset as a parameter. Further, FZ, FR, Fθ are the feed speeds along the Z, R and θ axes, respectively.

Upon receiving the $\Delta Z$, $\Delta R$, $\Delta \theta$ inputs, each pulse distributor, 106Z, 106R, 106θ executes a linear interpolation simultaneously along the Z, R and θ axes and generates distributed pulses PZ, PR, Pθ to rotate the motors 107Z, 107R, 107θ. With each lapse of the time $\Delta T$, the processor 102 computes values of $\Delta Z$, $\Delta R$, $\Delta \theta$ anew and accumulates the resulting values along the respective axes. In other words, the processor 102 executes the operations given by:

$$ZA + \Delta Z \longrightarrow ZA \quad . . . . . (4)$$

$$RA + \Delta R \longrightarrow RA \quad . . . . . (5)$$

$$\theta A + \Delta \theta \longrightarrow \theta A \quad . . . . . (6)$$

to update the coordinates ZA, RA, θA of the current position occupied by the hand HD of the robot, which coordinates are then stored in the data memory 103. The processor 103 also performs the following operations with each lapse of the time $\Delta T$:

$$ZR - \Delta Z \longrightarrow ZR \quad . \quad . \quad . \quad . \quad . \quad (7)$$

$$RR - \Delta R \longrightarrow RR \quad . \quad . \quad . \quad . \quad . \quad (8)$$

$$\theta R - \Delta\theta \longrightarrow \theta R \quad . \quad . \quad . \quad . \quad . \quad (9)$$

to update the remaining amounts of movement stored in the data memory 103. When the processor 102 senses that the conditions $ZR \geq \Delta Z$, $RR \geq \Delta R$, $OR \geq \Delta\theta$ hold, namely that the remaining amounts of movement, ZR, RR, $\theta R$ along the Z, R and $\theta$ axes are equal to or greater than the incremental values $\Delta Z$, $\Delta R$, $\Delta\theta$, respectively, $\Delta Z$, $\Delta R$, $\Delta\theta$ are applied to the pulse distributor 106Z, 106R, 106$\theta$. On the other hand, if it is sensed that the conditions $ZR < \Delta Z$, $RR < \Delta R$, $\theta R < \Delta\theta$ hold, then ZR, RR and $\theta R$ are applied to the pulse distributor 106Z, 106R, 106$\theta$. The hand is thus moved to the target position P1. When the hand arrives at the target position P1 (i.e. ZR=0, RR=0, $\theta R$=0), the processor 102 reads the next point data PD2 out of the RAM 103 and then performs the proceeds to execute control processing just as described above. When the point data PD2 is read, the processor 102 causes the robot 105 to move its hand HD (Fig. 2) from point P1 toward point P2'. Since the Z coordinate Z2' of point P2' has been taught as being no higher than the the lowermost unmachined workpiece W3, the proximity sensor SN mounted on the hand senses the presence of the uppermost workpiece Wl before the hand reaches the point P2. The sensor SN produces a touch signal TDS upon sensing the workpiece Wl, the signal being applied to the processor 102 which responds by immediately suspending control of the robot based on the point data PD2, and by reading the program data, stored in registration memory 104, that calls for the robot hand to grip the unmachined workpiece Wl from the stack of workpieces on the table WT. Upon reading said program data, the processor 102 executes the grip process step and causes the robot 105 to grip the workpiece Wl. When the robot hand has closed firmly on the workpiece, the robot 105 sends a grip complete signal WCS to the processor 102, which responds by reading the point data PD3 out of the data memory 103 to move the robot hand HD from point Px to point P3.

On the other hand, if the coordinate $Za$ of the current position becomes smaller than the Z coordinate $(Z2')$ of the point $P2'$ without the generation of the touch signal TDS, the processor 102 recognizes that all workpieces Wl ~ W3 have been machined and performs gripping control of the workpieces stacked over the distinct position P4 on the table WT (see dashed line of Fig. 2).

The foregoing series of operations is repeated for unmachined workpiece W2, which will be the next workpiece sensed by the proximity sensor SN, and then again for the final workpiece W3.

The foregoing description deals with the gripping and carrying of stacked unmachined workieces W1 through W3 from the workpiece table WT. It should be noted, however, that the invention can also be applied to the stacking of completed workpieces, and to the loading and unloading of workpieces. By way of example, assume that the robot is to (1) grip an unmachined workpiece from the workpiece table, (2) load the workpiece onto a machine tool where the workpiece is machined, (3) unload the completed workpiece from the machine, and (4) stack the completed workpiece on the workpiece table, the foregoing robot activities taking place in the described order. To achieve the foregoing operations, the output TDS of the sensor SN could be applied to a counter for counting the number of times the signal TDS is generated, up to a total of four. Then, in accordance with the count, the processor 102 would read program data for gripping, loading, unloading and stacking out of the registration memory 104 and then execute these operations based on the read data.

In accordance with the present invention as described and illustrated hereinabove, positional data is taught based on a position no higher than the lowermost workpiece in a stack, and the sensor SR is provided on the robot hand HD to sense when to grip or release a workpiece. Teaching is thus simplified because the operator need not teach gripping and

0092433

stacking positions in accurate fashion.

As many apparently widely different embodiments of the present invention can be made without departing from the spirit and scope thereof, it is to be understood that the invention is not limited to the specific embodiments thereof except as defined in the appended claims.

0092433

WHAT WE CLAIM IS:

1.    A method of controlling a robot, provided with a hand having a sensor, in accordance with stored robot command data and program data to a carry a workpiece, from a plurality of workpieces stacked on a table, to a predetermined point by gripping the workpiece with said hand, comprising the steps of:

(a)   moving the hand toward the plurality of stacked workpieces in accordance with the robot command data;

(b)   suspending movement of the hand when the sensor senses an uppermost one of the stacked plurality of workpieces;

(c)   gripping the uppermost workpiece with the hand in accordance with the program data;

(d)   generating a signal indicating that the hand has gripped the uppermost workpiece; and

(e)   moving the hand to the predetermined point in accordance with a subsequent item of robot command data, in response to generation of said signal.

2.    The method according to claim 1, further comprising a step of repeating steps (a) through (e) to grip and carry workpieces, remaining stacked on the table, to the predetermined point.

3.    A robot control apparatus for successively carrying workpieces, from a plurality of workpieces stacked on a table along the Z axis, to a predetermined point, comprising:

a robot having a hand for gripping and carrying workpieces;

a processor connected to the robot for controlling said robot in accordance with program data and robot command data which includes items of point data, and for receiving signals from the robot;

teaching means for teaching a series of the robot command data and for applying the robot command data to said processor;

a data memory connected to said processor for having the robot command data stored therein for subsequent reading by said processor;

a registration memory, connected to said processor, for storing the program data inclusive of data instructing said robot to close the hand in order to grip a workpiece; and

sensing means provided on the hand of said robot for delivering a detection signal to said processor upon sensing the proximity of a workpiece;

said processor reading the robot command data out of said data memory at the start of operation for controlling the robot in accordance with each item of point data in said robot command data, said robot moving its hand toward a first point in accordance with a first item of said point data and then along the Z axis toward a second point in accordance with a second item of said point data to approach the plurality of

0092433

stacked workpieces from above, said sensing means sensing an uppermost one of the stacked plurality of workpieces and responding by delivering the detection signal to said processor which responds by causing the robot to suspend movement of the hand and by reading the program data out of said registration memory, said processor executing processing based on said program data to cause the robot to close its hand on and grip said uppermost workpiece, said robot delivering a signal to said processor when said uppermost workpiece has been gripped, said processor responding by reading a third item of point data out of said data memory to cause the robot to move its hand to the predetermined point.

4. The apparatus according to claim 3, wherein said second item of said point data specifies a position along the Z axis which is lower than the true position of said uppermost workpiece.

5. The apparatus according to claim 4, wherein said second item of point data specifies a position along the Z axis no higher than the lowermost one of the plurality of stacked workpieces.

# Fig. 1

# Fig. 2

# Fig. 3

| | |
|---|---|
| | $V_1$ |
| | $R_1$ |
| PD$_1$ | $Z_1$ |
| | $\theta_1$ |
| | $G_{31}$ |
| | $V_2$ |
| PD$_2$ | $R_1$ |
| | $Z_2$ |
| | $\theta_1$ |
| | $V_3$ |
| | $R_3$ |
| PD$_3$ | $Z_3$ |
| | $\theta_3$ |

# Fig. 4

$P_1(Z_1, R_1, \theta_1)$   $P_3(Z_3, R_3, \theta_3)$

Px

$P_2$
$(Z_2, R_1, \theta_1)$

# Fig. 5

| | |
|---|---|
| $\Delta Z, \Delta R, \Delta\theta$ | |
| $ZA, RA, \theta A$ | |
| $ZR, RR, \theta R$ | |
| $Z2'$ | |

Robot Command
Data

103

104

105

WCS

107Z

SN

101

$\Delta Z$  106Z

$\Delta R$  106R

$\Delta\theta$  106θ

107R

107θ

TDS

102

4/4    0092433

Fig.6

0092433

European Patent Office

**EUROPEAN SEARCH REPORT**

Application number

EP  83 30 2229

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X,P L | EP-A-0 067 881  (FANUC)  * Whole document * | 1,2,4, 5 | B 25 J     9/00<br>G 05 B   19/42 |
| P,X L | EP-A-0 067 880  (FANUC)  * Whole document * | 1,2,4, 5 | |
| P,X L | EP-A-0 068 026  (FANUC)  * Whole document * | 1,2,4, 5 | |
| Y | US-A-3 306 471  (DEVOL)  * Page 4 - page 6, line 70; figure 1 * | 1,2 | |
| Y | US-A-3 501 642  (BONNIERFORETAGEN)  * Whole document * | 3 | TECHNICAL FIELDS SEARCHED (Int. Cl. 3)<br><br>B 25 J     9/00<br>G 05 B   19/00<br>G 01 B   11/00 |

The present search report has been drawn up for all claims

| Place of search | Date of completion of the search | Examiner |
|---|---|---|
| THE HAGUE | 15-08-1983 | RESSENAAR J.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82